# EUROPEAN PATENT SPECIFICATION

(11) **EP 1 994 398 B1**
(45) Date of publication and mention of the grant of the patent: **12.08.2009**
(21) Application number: 07713006.0
(22) Date of filing: 05.03.2007
(51) Int. Cl.: G01N 21/84, G01N 15/14, G06K 9/00, B01L 3/00

(54) **AUTOMATED DIGITAL IMAGE RECORDING SYSTEM FOR AND METHOD OF DIGITIZING SLIDES**
AUTOMATISCHES DIGITALES BILDAUFZEICHNUNGSSYSTEM ZUR DIGITALISIERUNG VON DIAS UND VERFAHREN DAFÜR
SYSTÈME AUTOMATISÉ D'ENREGISTREMENT D'IMAGES NUMÉRIQUES POUR NUMÉRISATION DE DIAPOSITIVES ET MÉTHODE DE NUMÉRISATION DE DIAPOSITIVES

(30) Priority: 03.03.2006 HU 0600177
(43) Date of publication of application: 26.11.2008
(73) Proprietor: 3Dhistech Kft., 1121 Budapest (HU)
(72) Inventor: MOLNÁR, Béla, H-1182 Budapest (HU); TAGSCHERER, Attila, 1196 Budapest (HU); VARGA, Viktor Sebestyén, 1141 Budapest (HU); VIRÁG, Tibor, H-1121 Budapest (HU)
(74) Representative: Szabo, Zsolt
(86) International application number: PCT/HU2007/000018
(87) International publication number: WO 2007/099382

(56) References cited:
- WO-A-95/22749
- US-A1- 2005 185 832
- US-B1- 6 327 377

## Description

The present invention relates to an automated digital image recording system and a method accomplished by means of such a system for digitizing slides, wherein said image recording system comprises a slide holding means, a mechanism for actuating the slide holding means, a first digital image recording means, a high magnification second digital image recording means and a control unit for software-based control of the automated image capturing.

Evaluating tissue biopsies is of high importance in the field of medical diagnostics. For performing histological evaluation, a piece of tissue is taken from a patient and sliced up into very thin sections. Then the sections are placed on glass plates and stained, and the slide with the thus obtained sample is subjected to a microscopic examination.

For identification and monitoring purposes, every slide is provided with an individual identifier, such as e.g. a bar code or a set of hand-written or printed characters/figures.

The efficiency of the evaluation can be significantly increased by first digitizing the samples with an automated imaging microscope and afterwards evaluating the digital images obtained in this way by an image managing routine. By most digital microscopes used nowadays, the slides are digitized in a very large number of steps, that is frame by frame, wherein each frame corresponds to a single microscopic field of view. The slide is arranged on a stage governed by a computer that controls the microscope, as well as the focusing on the sample.

The greater number of slides should be digitized, the more important it becomes to decrease the total operation time per slide. The total operation time is affected by the following major factors: the number of frames (or fields of view) to be imaged, the time taken by the starting, moving and stopping of the stage, the focusing time spent on the individual fields of view, and the time for completing the operations associated with the digital image capturing itself. Apparently, a decrease in the number of frames to be read leads to an automatic decrease in all further factors. Therefore, an aim of the present invention is to reduce the number of frames to be read at high magnification.

The microscope according to U.S. Patent No. 6,101,265 is equipped with two objectives, one of a smaller and one of a higher magnification. First, the slide is imaged as field of view by making use of the smaller magnification objective and the digital frames obtained in this way are then matched together and displayed on a screen. At this point, the pathologist carrying out the examination can choose the region of interest for him/her, which is then scanned again, at this time by making use of the higher magnification objective, and after having matched the frames together, the chosen digitized slide region is shown again to the user. Hence, here the number of frames to be imaged at high magnification is reduced only in case of a real-time evaluation, and thus the problem of fast and automated imaging of a great number of slides at high magnification remains to be unsolved. Moreover, the two microscopic objectives considerably raise the cost of such a device.

U.S. Patent No. 6,327,377 teaches an automated screening device and method for cytological specimen classification. As a first step of the classification, the digitization of specimen carrying slides is effected in three separate steps. In a first step, a barcode assigned to each slide for e.g. identifying the specimen on said slide is read out by a bar code reader. In a second step, a low resolution examination of the specimen takes place which is followed by a high resolution examination of said specimen or of a part thereof in the third step. The low and the high resolution examinations are performed by a bulky microscopic system comprising a low magnification objective and a high magnification objective, respectively, being interchangable with one another. Between the two kinds of examination of the specimen, an automatic change of the objectives is accomplished to provide for low or high resolution viewing of the specimen, as desired. An image of the specimen is captured through the objective by a single high-resolution camera arranged in the optical path. The time required to change from one of the objectives to the other is on the order of a few seconds - as is mentioned explicitly e.g. in U.S. Patent Appl. No. 2005/0185832. As a consequence, the total operation time per slide is high in this case.

International Publication Pamphlet No. WO 95/22749 and U.S. Patent Appl. No. 2005/185832 describe the application of standard bar code readers for reading out the encoded identification data that is provided in the form of a bar code on the slide with a sample to be scanned (digitized) in an automated manner.

U.S. Patent Appl. No. 2002/0090127 discloses a solution wherein a digital preview image of a slide with a sample as a whole is captured by a preview camera. The preview image is processed by a computer and based on a characteristic value (e.g. the light intensity) of each individual pixel the sample's position on the slide is determined. Then, only the fields of view corresponding to the pixels of the sample are imaged with the high magnification microscope. When the preview image is processed, however, every pixel with a characteristic value that satisfies a pre-set condition is considered as part of the image of the sample independently of the fact whether said pixel actually belongs to the sample or to other data/pieces of information being also present on the slide (such as an identifier of the sample in the form of e.g. a bar code). This means that said other-data/pieces of information are also scanned automatically at high magnification which superfluously increases the total operation time per slide. Neither the extraction nor the separation of such data/pieces of information from the captured image of the slide as a whole is straightforward; a complicated additional routine is required that is suitable for discriminating the actual sample and these further pieces of information from one another.

For instance, by means of a simple study of the light intensity, the legends or bar codes would be classified as areas to be also scanned, and therefore to avoid this, sophisticated expert systems are applied which take the sample's typical arrangement and morphology also into account when choosing the fields of view to be scanned by the high magnification microscope. Due to the interim analysis being completed, this, however, increases the duration of image capturing and/or the computing capacity required.

Such further pieces of information can be, for instance, the supplementary data indicated on the slide with a tissue sample used customarily when evaluating tissue samples, which e.g. can serve for identifying the sample. Typically, the pieces of information are provided in a region located in the vicinity of the end of the slide where no sample is present, e.g. in a free region situated at one end of the slide. The pieces of information can be provided in the form a handwriting, however, by an increase in the number of samples to be studied, the application of a bar code would be more and more preferred for the identification of the samples.

In order to reduce the number of frames to be read by the high magnification objective and simultaneously to decrease the total operation time of digital recording per slide, as well as to eliminate the above-identified problems, an automated digital image recording system is provided that serves for digitizing a slide having one or more regions with a sample and at least one separate region with a field of information. The first digital image recording means is adapted for reading out the at least one region containing the field of information. The image recording means comprises a preview camera for capturing a separate digital preview image of each sample containing region. The control unit is provided with a routine for searching pixels belonging to the samples in the preview images. The recording system according to the invention is disclosed in claim 1.

Preferred embodiments of the digital image recording system according to the invention are defined by Claims 2 to 8.

The method according to the invention is disclosed in claim 9.

Possible further preferred variants of the method according to the invention are defined by Claims 10 to 17.

Further details of the invention are discussed in relation to various embodiments and referring to drawings, wherein
- Figure 1 shows a plan view of a possible embodiment of the digital image recording system according to the invention;
- Figure 2 illustrates schematically an Y-axis view of a slide in a slide holding frame arranged on a rail, looking from the direction of the preview camera; and
- Figure 3 is a schematic plan view of a possible further embodiment of the image recording system according to the invention.

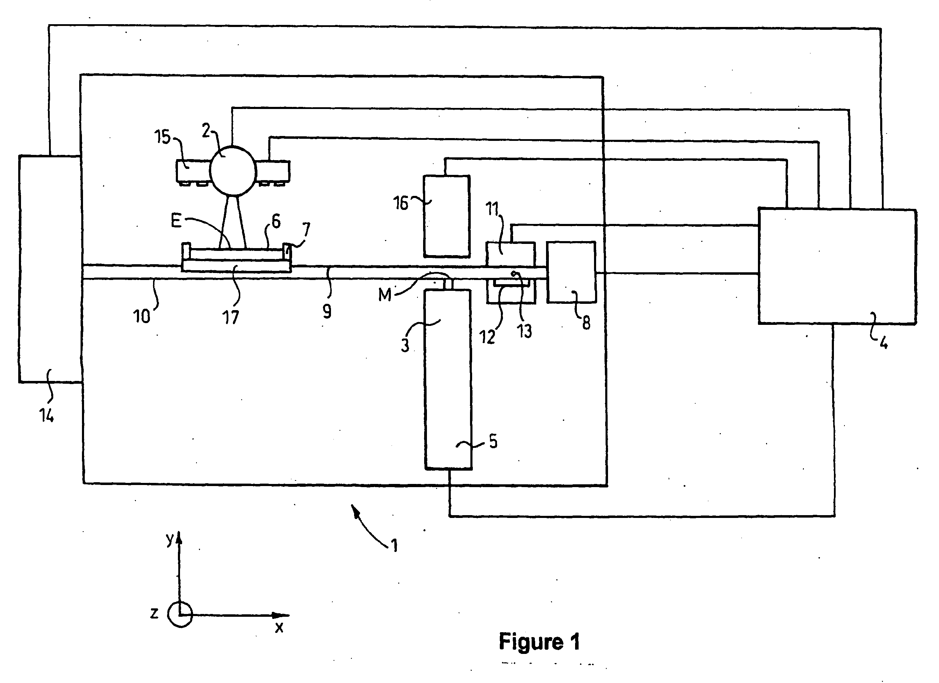

Figure 1 illustrates schematically a plan view of a possible embodiment of an image recording system 1 according to the invention. The image recording system 1 comprises two digital image recording means. Here, the first image recording means is equipped with a (preferably low resolution) preview camera 2 having a field of view E, while the second image recording means comprises a high resolution and high magnification microscope objective 3, as well as a CCD camera 5 that captures the image mapped by the objective 3 and is connected to a control unit - in this case to a computer 4. To avoid loss of information during digitization, preferentially the resolution of the CCD camera 5 is at least as high as that of the objective 3. As will be discussed later on, in a single imaging step an area with the size equal to the size of the field of view E and an area with the size equal to the size of the field of view M are digitized by the first and the second image recording means, respectively.

Between the preview camera 2 and the objective 3 a slide 6 (preferentially a microscope slide with a biological/tissue sample arranged thereon) fixed in a slide holding frame 7 is moved by means of a slide displacing mechanism. Such a slide displacing mechanism is disclosed e.g. by International Patent Appl. No. PCT/1B20051050351, and hence it is not discussed here in more detail. The slide holding frame 7 is attached to a stage 17 through a known type of suspension, wherein the stage 17 is affixed to a threaded bar 9 driven by a stepping motor 8 capable of effecting displacement along the axis X. Here, the threaded bar 9 brings about displacements of the stage 17 along a rail 10 lying in the axis X and, in turn, through the suspension, that of the slide holding frame 7 and the slide 6. Similarly, the rail 10 is affixed to a rail 12 lying in the axis Z of a stepping motor 11 that is capable of bringing about displacements along the axis Z. The rail 10 can be moved by means of a threaded bar 13 driven by the stepping motor 11. Thus, both the slide holding frame 7 and the slide 6 can be moved in both the X and Z directions. Here, the control of the stepping motors 8, 11 is equally performed by the control unit provided by the computer 4 in the present case.

The plane spanned by the axes X, Z can also be a horizontal one; in this case it is adequate if the slide 6 is supported by the slide holding frame 7 from below. In what follows, however, such an embodiment is shown, wherein the axis Z is vertical and hence the slide 6 is arranged in an edgewise position (that is, when slides of a rectangular shape are used, as is the case in general in the field of medical diagnostics, preferably laid flatwise on its longer edge) within the slide holding frame 7. It is noted, that the plane spanned by the axes X, Z can be arranged actually at any angle relative to the horizontal.

Preferably, a slide dispensing means 14 is connected to an end of the rail 10 parallel to the X axis that loads (unloads) the slides 6 into (from) the slide holding frame 7 automatically. Such a slide dispensing means 14 is disclosed e.g. by International Publication Pamphlet No. WO2004/113989.

The illumination required for the image capturing is preferably provided on the one hand by a light source 15 arranged in the vicinity of the preview camera 2 and directed onto the slide 6, and on the other hand by a light source 16 arranged on a side of the slide 6 opposite the objective 3. Preferably, both light sources 15, 16 are connected to the computer 4. Here, transmitted light microscopy is discussed, however, in case of other kinds of microscopy the illumination of the slides 6 can be realized in different manners; optionally, the light source(s) 15 and/or 16 might be dispensable and, hence, can even be omitted.

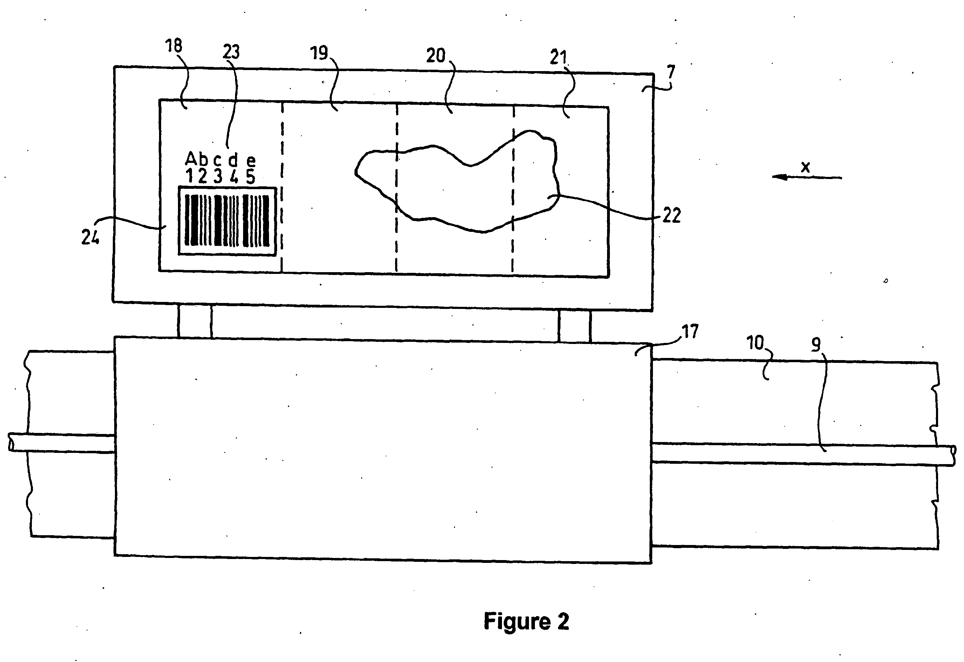

Figure 2 shows the slide holding frame 7 connected to the stage 17, that is arranged on the rail 10 parallel to the axis X, via a known type of suspension and the slide 6 of rectangular shape fixed therein. Such type of a suspension can be realized by e.g. the parallel linkage taught by International Patent Appl. No. PCT/IB2005/050351. The slide 6 is fastened by the frame 7 along its edges, that is, it has got no backplate, and therefore the slide 6 can be examined in transmitted light by the high magnification objective 3. In the present embodiment the physical dimensions of the slide 6 are 1 inch by 3 inches (about 25,4 mm by 76,2 mm). The preview camera 2 applied can be e.g. a traditional web camera with the resolution of 640 pixels by 480 pixels being commercially available and arranged preferably in such a manner that a slightly bigger portion than an 1 inch by 3/4 inch (about 25,4 mm by 19,05 mm) portion of the slide 6 fall into the field of view E of the preview camera 2. This means that the slide 6 can be imaged as a whole in four parts corresponding to regions 18, 19, 20, 21 denoted by dashed lines in the figure. The regions 18, 19, 20, 21 can also be defined in an overlapping manner, however, this is unnecessary as the displacement of the stage 17 can be controlled by the stepping motors 8, 11 connected to the computer 4 with a precision of microns, that is, with a much higher precision than the resolution of the preview camera 2. Thus, the regions 18, 19, 20, 21 can be captured in adjacent positions to one another and then can be simply matched together by applying a suitable software means.

Since four times the area of the field of view E of the preview camera 2 is larger than the total area of the actual regions 18, 19, 20, 21, it is preferred to crop the image of the portions located outside the slide 6 from the image of the field of view E of the preview camera 2. As it is obvious for a person skilled in the relevant art, this can be easily achieved by the application of a suitable software means.

The first region 18 is the field of information of the slide 6; the data/pieces of information for identifying a sample 22 present on the slide 6, optionally any further notations carrying information, can be found here. The field of information may contain, for instance, a legend 23 comprising printed or hand-written letters and/or numbers, or a bar code 24, or a further piece of visual information applied onto the slide, or any combination thereof.

As the field of information requires a different way of processing, it is preferred to deal with it differently as compared to the other regions 19, 20, 21 with a sample 22. In case of a legend 23, the computer 4 can be equipped with an optical character recognition, in particular with a writing recognition routine. The text recognized can be stored as a text file together with the high magnification image files of the slide 6, or can be optionally used to define the filenames of the image files. If bar codes 24 are used, the computer 4 can be equipped with a bar code recognition/reading routine and the (textual) information deciphered can be saved together with the high magnification image files of the slide 6. The advantage of this latter embodiment is that, on the one hand, by using the bar code 24, compared to handwriting, much more information can be included in the field of information, and on the other hand it is significantly cheaper to read the bar code 24 by means of a web camera and a bar code recognition/reading routine than to incorporate a complete bar code recognition/reading equipment into the system 1. Furthermore, an embodiment is also possible wherein the preview camera 2 is used merely to scan the regions 19, 20, 21 with a sample 22, while the region 18 with the field of information is read and processed by a bar code reader. In a further possible embodiment (if handwriting is contained in the field of information), the field of information is simply digitized by the preview camera 2, the image thus scanned is stored as an image file and shown to a user on demand who interprets the pieces of information that can be seen in the image himself/herself.

The embodiment of the image recording system 1 according to the present invention shown in Figures 1 and 2 can be used as follows.

The slides 6 to be digitized are arranged in the slide dispensing means 14 that loads the first slide 6 into the slide holding frame 7 by means of e.g. a robotic arm. If the image recording system 1 is not equipped with a slide dispensing means 14, the slide 6 is loaded into the image recording system 1 by the operator through an opening formed for this purpose, where the slide 6 goes into the slide holding frame 7. Upon control of the computer 4 the following operations are carried out. The stepping motor 8 moves the slide holding frame 7 along the rail 10 parallel to the axis X in front of the preview camera 2 so as to locate the first region 18 within the field of view E of the preview camera 2. A digital image of region 18 is captured, then the slide holding frame 7 is slided along the rail 10 by the stepping motor 8 so as to locate the second region 19 within the field of view E of the preview camera 2 and then a preview image of this region 19 is also captured. This procedure is then continued in a similar manner until a preview of the last region 21 is captured.

The image of the first region 18 is processed according to the nature of the information found in the field of information by one of the procedures already mentioned, and is stored in the computer 4 or in a suitable data storage means connected to the computer 4 through a network or other ways. Processing of the region 18 can take place simultaneously with capturing the preview images of the other regions 19, 20, 21. Indeed, the image recording system 1, as well as the slide dispensing means 14 can also be formed in such a manner that the region 18 with the field of information be ahind, that is, when the slide 6 is moved towards the preview camera 2 along the rail 10, at first region 21, then region 20, then region 19 and finally region 18 reaches the preview camera 2. In this case the recording can be commenced by region 21 and the preview images of regions 20, 19, 18 can be captured by displacing further the slide 6 along the axis X. A further possibility is to bring directly the region 18 in front of the preview camera 2 and then to capture regions 19, 20, 21 progressing backwards from it. Optionally, the computer 4 might be equipped with an image recognition routine being capable of making a decision whether the region 18, 19, 20 or 21 at issue contains a field of information or a portion of the sample 22, and the digital image is processed accordingly.

The digital preview images of the regions 19, 20, 21 are used for a software-based search of the location of the sample 22. This means that pixels belonging to the sample 22 are being searched within the regions 19, 20, 21 with a sample 22 of the digitized slide 6, and their spatial coordinates relative to the stage 17 within a reference frame defined by the stepping motors 8, 11 are determined. To the pixels classified as belonging to the sample 22, respective portions of the field of view M of the second image recording means (i.e. of the digital microscope) are assigned (preferably in an overlapping manner) and as a next step the thus defined fields of view M containing each a portion of the sample 22 are digitized at a high resolution.

To decide which pixel of the preview image belongs to the sample 22 (that is, whether the field of view M assigned to the pixel at issue during the high resolution and high magnification digitizing contains a portion of the sample 22), there are numerous procedures known from the fields of image recognition and image processing. A simplest solutions is to consider the light intensity of pixels, and if a certain threshold value thereof is reached, taking the pixel as belonging to the sample 22 and then defining to which field(s) of view M the pixel considered belongs to.

Furthermore, to the fields of view M containing the sample 22, X, Y coordinates are assigned and it is calculated into which positions the stage 17 should be moved in order that the field of view M concerned could be captured by the high magnification digital microscope.

For example, to perform a high resolution and high magnification scanning a 20x microscope objective 3 and a CCD camera 5 with the resolution of 1024 pixels by 768 pixels are used. Before the 20x magnification, an area with the size of about 0,23 µm by 0,23 µm of the slide 6 corresponds to a single pixel of the digital image captured by the second image recording means comprising the objective 3 and the CCD camera 5. This means that an area with the size of about 235 µm by 176 µm of the slide 6 could be digitized at each shot, i.e. this is the size of the field of view M of the second image recording means. It is noted here that at least an 5x microscope objective should be preferably used to end up with digital images that are of suitable quality for practical usage.

Before the next field of view M containing a portion of the sample 22 could be digitized, the captured image must be downloaded to the computer 4. In one of the embodiments this takes generally about 65 ms, depending on the size of the image and the quality of the connection. This is longer than the time period required for the slide 6 to be moved into its next position. After exposition, the displacement of the stage 17 immediately commences, thus by the time the image has been downloaded, the slide 6 already occupies a new position to be scanned. For the sake of simplicity, the digital images and frames created via scanning are referred to by the adjective "digital", that is, from now on the concepts of digital field of view M, digital sample 22 and digital slide 6 are used.

After all the fields of view M chosen on basis of the preview image have been scanned at high resolution and high magnification, or simultaneously with the scanning, the digital fields of view M are matched along their adjacent edges (that can be optionally overlapping). A first possibility is to store the digital slide 6 containing the digital sample 22 composed of the digital fields of view M that are matched together. A further possibility is to store merely the data related to the matchings themselves (contiguity relations, overlappings of individual frames, measures of translation, etc.) along with the files of the individual digital fields of view M, and when the digital slide 6 is displayed the files of the digital fields of view M are displayed in harmony with the data related to the matchings. A half-way measure is also conceivable; a given number of neighbouring digital fields of view M is matched together in advance resulting in tiny digital fields, and the tiny fields as well as the data related to the matchings thereof are stored in files. In other cases only the files of the digital fields of view M are stored, and later on put together and looked at by means of a suitable digital slide displaying and manipulating routine.

After high resolution and high magnification scanning of the slide 6, the slide holding frame 7 is returned to the slide dispensing means 14 by means of the stepping motors 8, 11, where the already scanned slide 6 is replaced via the robotic arm by a further slide 6 to be also scanned. In lack of a slide dispensing means 14, the exchange of slides 6 can be effected manually or via other means.

In certain embodiments the computer 4 is connected to a local network or to the Internet. In this case storage, display and further operations do not take place definitely in the computer 4. Indeed, there is no need for the computer 4 performing control of the image recording system 1 and the image recording system 1 itself to be physically at the same location; the control itself can also be realized through a network.

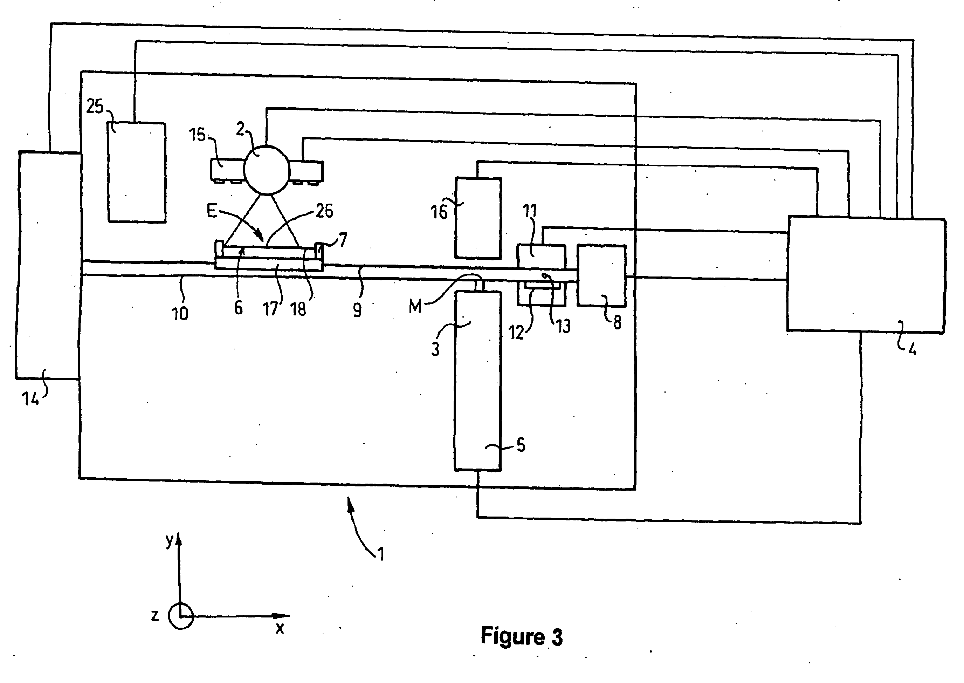

Figure 3 illustrates the schematical plan view of a possible further embodiment of the image recording system according to the invention. Here the only difference relative to the embodiment discussed earlier is that the first image recording means comprises two elements: a preview camera 2 and a bar code scanner 25. These are preferentially arranged after each other along the rail 10. The bar code 24 is preferably placed within the field of information (i.e. within the first region 18) with an orientation that allows reading the bar code 24 by the bar code scanner 25 (i.e. with the orientation shown in Figure 2) when the slide 6 is passed along the axis X. In other cases, the slide 6 can also be translated along the axis Y when the bar code 24 appears in front of the bar code scanner 25.

In this latter case the preview camera 2 can be arranged so as to capture the region 26 with the sample 22 of the slide 6 as a single frame. Indeed, the slide 6 can be divided into more than one sample containing regions 19, 20, 21 in this case, too.

After scanning the bar code 24 and capturing the preview image, the operation is identical to that of the first embodiment.

The embodiments shown above are exemplary only; it is clear that a person skilled in the relevant field can effect a number of changes without departing the scope of protection defined by the attached set of claims.

## Claims

1. An automated digital image recording system (1) adapted for digitizing slides (6) having one or more regions (26; 19, 20, 21) with sample (22) and at least one separate region (18) with a field of information, the image recording system (1) comprising a slide holding means (7, 17), a mechanism for its actuation, a first image recording means, a second digital 'image recording means of high magnification and a control unit (4) for a software-based control of the automated image capturing, ***characterized in* that** the first digital image recording means is provided with a low resolution preview camera (2) for capturing a separate digital preview image of each of the regions (26; 18, 19, 20, 21) on the slide, from region to region, and the control unit (4) is provided with (i) a routine for extracting the information content of the preview image(s) of the at least one region (18) with a field of information and (ii) a routine for searching pixels that belong to the sample (22) in the remaining preview images.

2. The image recording system according to Claim 1, ***characterized in* that** the sample (22) is located in a single region (26), of which a single preview image is taken by the preview camera (2).

3. The image recording system according to Claim 1 or 2, **characterized in that** the field of information comprises a legend (23) and/or a bar code (24) and/or a further piece of visual information.

4. The image recording system according to Claim 3, ***characterized in* that** said routine for extracting the information content is an optical character recognition and/or bar code scanning routine for reading out the field of information.

5. The image recording system according to any of Claims 1 to 4, ***characterized in* that** a slide dispensing means (14) is connected to the system (1) which upon command of the control unit (4) loads/unloads the slides (6) to be digitized automatically.

6. The image recording system according to any of Claims 1 to 5, ***characterized in* that** the low resolution preview camera is a web camera with the resolution of 640 pixels by 480 pixels.

7. The image recording system according to any of Claims 1 to 6, ***characterized in* that** the second digital image recording means of high magnification comprises a single microscope objective (3) and a digitizing unit, preferably a CCD camera (5), for digitizing the image mapped by the objective (3).

8. The image recording system according to any of Claims 1 to 7, ***characterized in* that** the mechanism for actuating the slide holding means (7, 17) comprises rails (10, 12) perpendicular to each other, threaded bars (9, 13) extending along respective rails (10,12), stepping motors (8,11) driving respective threaded bars (9, 13) and a member for connecting the threaded bars (9, 13) with the slide holding frame (7), preferably in the form of a suspension allowing perpendicular displacements relative to the plane spanned by the rails (10, 12).

9. A method of automated digitization of slides (6) having one or more regions (26; 19, 20, 21) with sample (22) and at least one separate region (18) with a field of information by a digital image recording system (1) comprising a stride holding means (7, 17), a mechanism for actuating it, a first digital image recording means, a second digital image recording means of high magnification and a control unit (4) for a software-based control of the automates Image recording, ***characterized by*** the steps of
(*a*) arranging a slide (6) within the slide holding means (7,17);
(*b*) moving the slide (6) by the actuating mechanism to the first digital image recording means equipped with a low resolution preview camera;
(*c*) capturing a separate digital preview image of each of the one or more regions (26; 18, 19, 20, 21) on the slide, from region to region, by the low resolution preview camera (2);
(*d*) by analyzing the preview images captured, making a decision with regard to which region (26; 19, 20, 21) contains sample (22) and which region (18) contains a field of information;
(*e*) extracting the piece(s) of information from the at least one region (18) labelled as containing a field of information;
(*f*) detecting pixels belonging to the sample (22) in the remaining preview image(s);
*(g)* moving the slide (6) to the second digital image recording means by the actuating mechanism and capturing a high magnification digital image of all the fields of view (M) that correspond to the pixels detected; and.
*(h)* storing said extracted piece(s) of information and said high magnification digital image(s) captured by the second digital image recording means.

10. The method according to Claim 9, ***characterized in* that** steps (*a*) to (*h*) are governed by the control unit (4) which is preferably a computer.

11. The method according to Claim 9 or 10, ***characterized in* that** the high magnification digital images are matched along their adjacent, optionally overlapping edges and are displayed.

12. The method according to any of Claims 9 to 11, ***characterized in* that** the field of information comprises a legend (23) and/or a bar code (24) and/or a further piece of visual information.

13. The method according to Claim 12, ***characterized in* that** the image (s) of the at least one region (18) of the field of information is(are) processed and/or displayed by means of an optical character recognition routine and/or a bar code scanning routine.

14. The method according to any of Claims 9 to-13, ***characterized in* that** the low resolution preview camera is a web camera with the resolution of 640 pixels by 480 pixels.

15. The method according to any of Claims 9 to 14, ***characterized in* that** in step (*a*) the slide (6) is arranged within the slide holding frame (7) by a slide dispensing means (14) that loads/unloads the slide (6) automatically.

16. The method according to Claims. 9, ***characterized in* that** the extraction of the Information content of the field of information is performed by displaying the preview image of the field of view for a user.

17. The method according to any of Claims 9 to 16, ***characterized by*** being performed on a plurality of slides (6) one after the other, wherein the slides (6) are delivered from the slide dispensing means (14) into the slide holding means (7, 17) one after the other upon signal of the control unit (4).

## Patentansprüche

1. Automatisiertes digitales Bildaufzeichnungssystem (1) zum Digitalisieren von Objektträgern, welche einen oder mehrere Bereiche (26; 19, 20, 21) mit Proben (22) und mindestens einen gesonderten Bereich (18) mit einem Informationsfeld aufweisen, wobei das Bildaufzeichnungssystem (1) eine Objektträgerhalterung (7, 17), einen Mechanismus zu deren Betätigung, eine erste digitale Bildaufzeichnungseinrichtung, eine zweite digitale Bildaufzeichnungseinrichtung mit starker Vergrößerung und eine Steuereinheit (4) für eine softwaregestützte Steuerung der automatisierten Bildaufnahme enthält, **dadurch gekennzeichnet, dass** die erste digitale Bildaufzeichnungseinrichtung mit einer eine geringe Auflösung aufweisenden Vorschau-Kamera (2) zur von Bereich zu Bereich erfolgenden Aufnahme eines gesonderten digitalen Vorschaubildes von jedem der auf dem Objektträger befindlichen Bereiche (26; 18, 19, 20, 21) versehen ist, während die Steuereinheit (4) mit (i) einer Routine zum Entnehmen des Infomationsgehaltes aus dem Vorschaubild (den Vorschaubildern) des mindestens einen mit einem Informationsfeld versehenen Bereichs (18) und mit (ii) einer Routine zum Suchen von Bildpunkten in den verbleibenden Vorschaubildern, die zu der Probe (22) gehören, versehen ist.

2. Bildaufzeichnungssystem nach Anspruch 1, **dadurch gekennzeichnet, dass** die Probe (22) in einem einzelnen Bereich (26) angeordnet ist, von welchem ein einzelnes Vorschaubild mit der Vorschau-Kamera aufgenommen wird.

3. Bildaufzeichnungssystem nach Anspruch 1 oder 2, **dadurch gekennzeichnet, dass** das Informationsfeld eine Legende (23) und/oder einen Bar-Code (24) und/oder eine weitere visuelle Information enthält.

4. Bildaufzeichnungssystem nach Anspruch 3, **dadurch gekennzeichnet, dass** die besagte Routine zum Entnehmen des Informationsgehaltes eine optische Zeichen erkennende und/oder Bar-Code abtastende Routine zum Auslesen des Informationsfeldes ist.

5. Bildaufzeichnungssystem nach einem der Ansprüche 1 bis 4, **dadurch gekennzeichnet, dass** an dem System (1) ein Objektträger-Spender (14) angeschlossen ist, welcher auf Befehl der Steuereinheit (4) zur Zuführung/Entnahme der automatisch zu digitalisierenden Objektträger (6) dient.

6. Bildaufzeichnungssystem nach einem der Ansprüche 1 bis 5, **dadurch gekennzeichnet, dass** die eine geringe Auflösung aufweisende Vorschau-Kamera eine Web-Kamera mit einer Auflösung von 640 x 480 Bildpunkten (Pixeln) ist.

7. Bildaufzeichnungssystem nach einem der Ansprüche 1 bis 6, **dadurch gekennzeichnet, dass** die zweite digitale Bildaufzeichnungseinrichtung mit starker Vergrößerung ein einzelnes Mikroskopobjektiv (3) und eine Digitalisierungseinheit, vorzugsweise eine CCD-Kamera (5) zum Digitalisieren des von dem Objektiv abgebildeten Bildes enthält.

8. Bildaufzeichnungssystem nach einem der Ansprüche 1 bis 7, **dadurch gekennzeichnet, dass** der Mechanismus zum Betätigen der Objektträgerhalterung (7, 17) aufeinander senkrechte Schienen (10, 12), entlang der jeweiligen Schienen (10, 12) verlaufende mit Gewinde versehene Stäbe (9, 13), Schrittmotoren (8, 11), die die jeweiligen mit Gewinde versehenen Stäbe (9, 13) bewegen, und ein Glied zum Verbinden der mit Gewinde versehenen Stäbe (9, 13) mit dem Objektträgerhalterahmen (7), insbesondere in Form eines Gehänges, das eine zu der von den Schienen (10, 12) aufgespannten Ebene senkrechte Verschiebung erlaubt, aufweist.

9. Verfahren zur automatisierten Digitalisierung von Objektträgern (6), die einen oder mehrere Bereiche (26; 19, 20, 21) mit einer Probe (22) und mindestens einen gesonderten Bereich (18) mit einem Informationsfeld aufweisen, mit Hilfe eines digitalen Bildaufzeichnungssystems (1), das eine Objektträgerhalterung (7, 17), einen Mechanismus zu deren Betätigung, eine erste digitale Bildaufzeichnungseinrichtung, eine zweite digitale Bildaufzeichnungseinrichtung mit starker Vergrößerung und eine Steuereinheit (4) zur softwaregestützten Steuerung der automatisierten Bildaufzeichnung enthält, **gekennzeichnet durch** die Schritte:
a) Anordnen eines Objektträgers (6) in der Objektträgerhalterung (7, 17);
b) Bewegen des Objektträgers (6) mit Hilfe des Betätigungsmechanismus zu der ersten digitalen Bildaufzeichnungseinrichtung, die mit einer über eine geringe Auflösung verfügenden Vorschau-Kamera (2) ausgestattet ist;
c) von Bereich zu Bereich erfolgendes Aufnehmen jeweils gesonderter digitaler Vorschaubilder von dem einen Bereich oder jedem der mehreren Bereiche (26; 18, 19, 20, 21) auf dem Objektträger, mit Hilfe der über eine geringe Auflösung verfügenden Vorschau-Kamera (2)
d) **durch** Analysieren der aufgenommenen Vorschaubilder Treffen einer Entscheidung in Hinsicht darauf, welcher Bereich (26; 19, 20, 21) eine Probe (22) enthält und welcher Bereich (18) ein Informationsfeld enthält;
e) Entnehmen einer (von) Information(en) aus dem mindestens einen Bereich (18), welcher als ein Informationsfeld beinhaltend **gekennzeichnet** ist;
f) Detektieren von Bildpunkten, die zu der Probe (22) in dem (den) übrigen Vorschaubild(ern) gehören;
g) mit Hilfe des Betätigungsmechanismus Bewegen des Objektträgers (6) zu der zweiten digitalen Bildaufzeichnungseinrichtung und Aufnehmen eines digitalen Bildes mit starker Vergrößerung von all denjenigen Feldern der Ansicht (M), die zu den detektierten Bildpunkten gehören; und
h) Speichern der besagten entnommenen Information(en) und des (der) besagten mit Hilfe der zweiten digitalen Bildaufzeichnungseinrichtung aufgenommenen digitalen Bildes (Bilder) mit starker Vergrößerung.

10. Verfahren nach Anspruch 9, **dadurch gekennzeichnet, dass** die Schritte a) bis h) von der Steuereinheit (4) gesteuert werden, welche vorzugsweise ein Rechner ist.

11. Verfahren nach Anspruch 9 oder 10, **dadurch gekennzeichnet, dass** die stark vergrößerten digitalen Bilder entlang ihrer benachbarten sich optionell überlappenden Ränder aneinander angepasst und angezeigt werden.

12. Verfahren nach einem der Ansprüche 9 bis 11, **dadurch gekennzeichnet, dass** das Informationsfeld eine Legende (23) und/oder einen Bar-Code (24) und/oder eine weitere visuelle Information enthält.

13. Verfahren nach Anspruch 12, **dadurch gekennzeichnet, dass** das (die) Bild (Bilder) von dem mindestens einen Bereich (18) des Informationsfeldes mit Hilfe einer optische Zeichen erkennenden und/oder Bar-Code abtastenden Routine verarbeitet und/oder angezeigt wird (werden).

14. Verfahren nach einem der Ansprüche 9 bis 13, **dadurch gekennzeichnet, dass** die über eine geringe Auflösung verfügende Vorschau-Kamera eine Web-Kamera mit einer Auflösung von 640 × 480 Bildpunkte (Pixel) ist.

15. Verfahren nach einem der Ansprüche 9 bis 14, **dadurch gekennzeichnet, dass** in Schritt a) der Objektträger (6) mit Hilfe eines den Objektträger (6) automatisch beladenden/entladenden Objektträgerspenders (14) in den Objektträgerhalterahmen (7) angeordnet wird.

16. Verfahren nach Anspruch 9, **dadurch gekennzeichnet, dass** das Entnehmen des Informationsgehaltes aus dem Informationsfeld durch für den Anwender erfolgendes Anzeigen des Vorschau-Bildes des Informationsfeldes durchgeführt wird.

17. Verfahren nach einem der Ansprüche 9 bis 16, **dadurch gekennzeichnet, dass** es auf einer Mehrzahl von Objektträgern (6) jeweils einzeln einander folgend durchgeführt wird, wobei die Objektträger (6) einer nach dem anderen auf ein Signal der Steuereinheit (4) von dem Objektträgerspender (14) in die Objektträgerhalterung (7, 17) gefördert werden.

## Revendications

1. Système automatisé d'enregistrement d'images numériques (1) adapté pour numériser des diapositives (6) ayant une ou plusieurs régions (26 ; 19, 20, 21) avec échantillon (22) et au moins une région séparée (18) avec un champ d'information, le système d'enregistrement d'images (1) comprenant un moyen de maintien de diapositives (7, 17), un mécanisme pour son actionnement, un premier moyen d'enregistrement d'images numériques, un deuxième moyen d'enregistrement d'images numériques à fort grossissement et une unité de commande (4) pour une commande par logiciel de la capture d'images automatisée, ***caractérisé en ce que*** le premier moyen d'enregistrement d'images numériques est prévu avec une caméra de prévisualisation (2) basse résolution pour capturer une image de prévisualisation numérique séparée de chacune des régions (26 ; 18, 19, 20, 21) sur la diapositive, de région à région, et l'unité de commande (4) est prévue avec (i) une routine pour extraire le contenu d'information de la (des) image(s) de prévisualisation de l'au moins une région (18) avec un champ d'information et (ii) une routine pour rechercher des pixels qui appartiennent à l'échantillon (22) dans les images de prévisualisation restantes.

2. Système d'enregistrement d'images selon la revendication 1, ***caractérisé en ce que*** l'échantillon (22) est situé dans une région unique (26), dont une image de prévisualisation unique est prise par la caméra de prévisualisation (2).

3. Système d'enregistrement d'images selon la revendication 1 ou 2, ***caractérisé en ce que*** le champ d'information comprend une légende (23) et/ou un code à barres (24), et/ou une autre information visuelle.

4. Système d'enregistrement d'images selon la revendication 3, ***caractérisé en ce que*** ladite routine pour extraire le contenu d'information est une routine de reconnaissance de caractères optiques et/ou de balayage de code à barres pour lire le champ d'information.

5. Système d'enregistrement d'images selon l'une quelconque des revendications 1 à 4, ***caractérisé en ce qu*'**un moyen de distribution de diapositives (14) est connecté au système (1) qui sur une commande de l'unité de commande (4) charge/décharge les diapositives (6) devant être numérisées automatiquement.

6. Système d'enregistrement d'images selon l'une quelconque des revendications 1 à 5, ***caractérisé en ce que*** la caméra de prévisualisation basse résolution est une webcam avec une résolution de 640 pixels par 480 pixels.

7. Système d'enregistrement d'images selon l'une quelconque des revendications 1 à 6, ***caractérisé en ce que*** le deuxième moyen d'enregistrement d'images numériques à fort grossissement comprend un objectif (3) de microscope unique et une unité de numérisation, préférablement une caméra CCD (5), pour numériser l'image représentée par l'objectif (3).

8. Système d'enregistrement d'images selon l'une quelconque des revendications 1 à 7, ***caractérisé en ce que*** le mécanisme pour actionner le moyen de maintien de diapositives (7, 17) comprend des rails (10, 12) perpendiculaires l'un à l'autre, des barres filetées (9, 13) s'étendant le long des rails (10, 12) respectifs, des moteurs pas à pas (8, 11) entraînant des barres filetées (9, 13) respectives et un élément pour connecter les barres filetées (9, 13) avec le cadre de maintien de diapositives (7), préférablement sous la forme d'une suspension permettant des déplacements perpendiculaires par rapport au plan couvert par les rails (10, 12).

9. Procédé de numérisation automatique de diapositives (6) ayant une ou plusieurs régions (26 ; 19, 20, 21) avec échantillon (22) et au moins une région séparée (18) avec un champ d'information par un système d'enregistrement d'images numériques (1) comprenant un moyen de maintien de diapositives (7, 17), un mécanisme pour l'actionnement de celui-ci, un premier moyen d'enregistrement d'images numériques, un deuxième moyen d'enregistrement d'images numériques à fort grossissement et une unité de commande (4) pour une commande par logiciel de la capture d'images automatisée, ***caractérisé par*** les étapes de
(*a*) agencement d'une diapositive (6) à l'intérieur du moyen de maintien de diapositives (7, 17) ;
(*b*) déplacement de la diapositive (6) par le mécanisme d'actionnement jusqu'au premier moyen d'enregistrement d'images numériques équipé d'une caméra de prévisualisation basse résolution ;
(*c*) capture d'une image de prévisualisation numérique séparée de chacune de l'une ou plusieurs région(s) (26 ; 18, 19, 20, 21) sur la diapositive, de région à région, par la caméra de prévisualisation basse résolution (2) ;
(*d*) par analyse des images de prévisualisation capturées, prise d'une décision quant à quelle région (26 ; 19, 20, 21) contient l'échantillon (22) et quelle région (18) contient un champ d'information ;
(*e*) extraction de la (des) information(s) à partir de l'au moins une région (18) marquée comme contenant un champ d'information ;
(*f*) détection de pixels appartenant à l'échantillon (22) dans la (les) image(s) de prévisualisation restantes ;
(*g*) déplacement de la diapositive (6) jusqu'au deuxième moyen d'enregistrement d'images numériques par le mécanisme d'actionnement et capture d'une image numérique à fort grossissement de tous les champs de visée (M) qui correspondent aux pixels détectés ; et
(*h*) stockage de ladite (desdites) information(s) extraite(s) et de ladite (desdites) image(s) numérique(s) à fort grossissement capturée(s) par le deuxième moyen d'enregistrement d'images numériques.

10. Procédé selon la revendication 9, ***caractérisé en ce que*** les étapes (*a*) à (*h*) sont régies par l'unité de commande (4) qui est préférablement un ordinateur.

11. Procédé selon la revendication 9 ou 10, ***caractérisé en ce que*** les images numériques à fort grossissement sont mises en correspondance le long de leurs bords adjacents, facultativement en chevauchement, et sont affichées.

12. Procédé selon l'une quelconque des revendications 9 à 11, ***caractérisé en ce que*** le champ d'information comprend une légende (23) et/ou un code à barres (24), et/ou une autre information visuelle supplémentaire.

13. Procédé selon la revendication 12, ***caractérisé en ce que*** la (les) image(s) de l'au moins une région (18) du champ d'information est (sont) traitée(s) et/ou affichée(s) au moyen d'une routine de reconnaissance de caractères optiques et/ou d'une routine de balayage de code à barres.

14. Procédé selon l'une quelconque des revendications 9 à 13, ***caractérisé en ce que*** la caméra de prévisualisation basse résolution est une webcam avec une résolution de 640 pixels par 480 pixels.

15. Procédé selon l'une quelconque des revendications 9 à 14, ***caractérisé en ce que*** à l'étape (a), la diapositive (6) est agencée dans le cadre de maintien de diapositives (7) par un moyen de distribution de diapositives (14) qui charge/décharge la diapositive (6) automatiquement.

16. Procédé selon la revendication 8, ***caractérisé en ce que*** l'extraction du contenu d'information du champ d'information est effectuée par un affichage de l'image de prévisualisation du champ de visée pour un utilisateur.

17. Procédé selon l'une quelconque des revendications 9 à 16, **caractérisé en ce qu'**étant exécuté sur une pluralité de diapositives (6) l'une après l'autre, dans lequel les diapositives (6) sont distribuées du moyen de distribution de diapositives (14) dans le moyen de maintien de diapositives (7, 17) l'une après l'autre sur un signal de l'unité de commande (4).
